(19) Europäisches Patentamt
European Patent Office
Office européen des brevets

(11) **EP 2 103 409 A1**

(12) **EUROPEAN PATENT APPLICATION**

(43) Date of publication:
**23.09.2009 Bulletin 2009/39**

(51) Int Cl.:
***B29C 45/54*** *(2006.01)* ***B29C 45/76*** *(2006.01)*

(21) Application number: **09100142.0**

(22) Date of filing: **23.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.03.2008 JP 2008073265**

(71) Applicant: **Fanuc Ltd**
**Yamanashi 401-0597 (JP)**

(72) Inventors:
• **Maruyama, Junpei**
**Minamitsuru-gun**
**Yamanashi 401-0597 (JP)**
• **Takatsugi, Satoshi**
**Minamitsuru-gun**
**Yamanashi 401-0597 (JP)**

(74) Representative: **Thum, Bernhard**
**Wuesthoff & Wuesthoff**
**Patent- und Rechtsanwälte**
**Schweigerstrasse 2**
**81541 München (DE)**

(54) **Injection molding machine of pre-plasticization type with abnormality detecting device**

(57)    An injection molding machine of pre-plasticization type (100) capable of detecting worn state of resin passage closing means and determining abnormal closure by the resin passage closing means. The injection molding machine comprises: a screw (6) arranged in a plasticizing cylinder (7) to plasticize resin; a plunger (1) arranged in an injection cylinder (2) to inject the resin; resin passage closing means (5) that closes a resin passage connecting the plasticizing cylinder and the injection cylinder while the plunger is advanced to inject the resin; rotational force detection means that detects a rotational force exerted on the screw while the plunger is advanced; and closure abnormality determining means that determines abnormality of the resin passage closing means based on the rotational force detected by the rotational force detection means while the plunger is advanced.

FIG. 1

**Description**

BACKGROUND OF THE INVENTION

1. Field of the Invention

The present invention relates to an injection molding machine of pre-plasticization type provided with an abnormality detecting device.

2. Description of the Related Art

A pre-plasticization type injection molding machine comprises a plasticizing section having a plasticizing screw and an injection section having an injection plunger. A check valve is incorporated in a resin passage that internally connects the plasticizing section and the injection section, whereby the opening and closing of the resin passage can be controlled. In a plasticizing process, the check valve is opened so that a resin melted in the plasticizing section can be fed into the injection section. In injection and pressure-holding processes, the check valve is closed so that the molten resin is prevented from flowing back to the plasticizing section.

JP 5-84793A discloses a pre-plasticization type injection molding machine in which an element of a shutter valve is vertically slid in a resin passage from a plasticizing cylinder as a plasticizing section to an injection cylinder as an injection section, thereby opening or closing the passage. While the shutter valve is open, a passage closing portion of the valve element is exposed to the outside by a slide structure of the valve. An operator of the injection molding machine can visually check the worn state of the exposed valve element.

JP 3-97518A discloses a pre-plasticization type injection molding machine provided with a driver that moves a plasticizing screw along the axis of a plasticizing cylinder. In an injection process using an injection cylinder, the plasticizing screw is advanced along the axis of the plasticizing cylinder so that its distal end closes a resin passage.

JP 7-11321U discloses a technique in which a check valve is disposed in a resin passage that extends from a plasticizing cylinder to an injection cylinder, whereby a molten resin is prevented from flowing back from the injection cylinder to the plasticizing cylinder during an injection process. Also disclosed is an injection molding machine in which a rod that can be ejected into a plasticizing screw by the agency of a fluid pressure is provided in place of the check valve. The resin passage is closed by ejecting the rod and opened by retracting the rod into the screw.

JP 8-183078U discloses a technique in which a resin passage is closed by closing a valve as a plasticizing screw retreats. Further, JP 11-165333A discloses a pre-plasticization type injection molding machine in which a resin passage is closed by rotating a plasticizing screw.

It is known that if the check valve is repeatedly closed and opened, it is worn and disabled to close the resin passage normally. If the resin passage cannot be normally closed by the check valve, the molten resin flows back to the plasticizing section in the injection and pressure-holding processes, so that undesirable problems, such as a molding failure, resin stagnation, etc., arise. Thus, the check valve must be replaced depending on the degree of its wear.

In the technique disclosed in JP 5-84793A, the shutter valve is repeatedly opened and closed during a continuous molding operation, so that the worn state of the shutter valve cannot be visually recognized with ease. Since the regions near the shutter valve are heated to high temperature, moreover, the operator is exposed to danger when he/she visually checks the valve during the continuous molding operation. Accordingly, the continuous molding must be interrupted during the visual check of the shutter valve. The interruption of the continuous molding results in a reduction in operating efficiency, and hence, an increase in production cost.

In the technique disclosed in JP 3-97518A, a member mounted on the distal end of the plasticizing screw that engages the resin passage to be closed wears, so that it must be replaced periodically. However, the worn state of the member on the screw end cannot be externally recognized, so that worn areas cannot be checked with ease.

Since each of the backflow prevention means disclosed in JP 7-11321U and JP 8-183078A and JP11-165333A is located in the resin passage, moreover, the degree of wear of the check valve cannot be recognized with ease, as described in connection with JP 5-84793A and JP 3-97518A.

SUMMARY OF THE INVENTION

The present invention provides a pre-plasticization type injection molding machine capable of detecting the worn state of closing means in a resin passage and determining abnormal closing of the closing means. Further, the present invention provides a pre-plasticization type injection molding machine capable of determining conformity of a molded product, i.e. whether a molded product is defective or non-defective, and predicting the time for replacement of closing means and a pre-plasticization type injection molding machine that facilitates an operator to determine abnormality of closing means.

According to an aspect of the present invention, an injection molding machine of pre-plasticization type comprises: a screw arranged in a plasticizing cylinder to plasticize resin; a plunger arranged in an injection cylinder to inject the resin; resin passage closing means that closes a resin passage connecting the plasticizing cylinder and the injection cylinder while the plunger is advanced to inject the resin; rotational force detection means that detects a rotational force exerted on the screw while the plunger is advanced; and closure abnormality determining means that determines abnormality of the resin passage closing means based on the rotational force detected by the rotational force detection means while the plunger is advanced.

The closure abnormality determining means may determine abnormality of the resin passage closing means based on a comparison between a predetermined value and one of a maximum value of the detected rotational force, an integrated value of the detected rotational force with respect to time, and an integrated value of the detected rotational force with respect to position of the plunger while being advanced.

The injection molding machine of pre-plasticization type may further comprise resin pressure detection means that detects a pressure of the resin in the injection cylinder while the plunger is advanced, and the closure abnormality determining means may determine abnormality of the resin passage closing means based on a ratio between the detected resin pressure and the detected rotational force.

According to another aspect of the invention, an injection molding machine of pre-plasticization type comprises: a screw arranged in a plasticizing cylinder to plasticize resin; a plunger arranged in an injection cylinder to inject the resin; resin passage closing means that closes a resin passage connecting the plasticizing cylinder and the injection cylinder while the plunger is advanced to inject the resin; rotational force detection means that detects a rotational force exerted on the screw while the plunger is advanced; and conformity determination means that determines conformity of a molded product based on the rotational force detected by the rotational force detection means while the plunger is advanced.

The conformity determination means may determine the conformity of the molded product based on a comparison between a predetermined value and one of a maximum value of the detected rotational force, an integrated value of the detected rotational force with respect to time, and an integrated value of the detected rotational force with respect to position of the plunger while being advanced.

The injection molding machine of pre-plasticization type may further comprise resin pressure detection means that detects a pressure of the resin in the injection cylinder while the plunger is advanced, and the conformity determination means may determine conformity of the molded product based on a ratio between the detected resin pressure and the detected rotational force.

According to still another aspect of the invention, an injection molding machine of pre-plasticization type comprises: a screw arranged in a plasticizing cylinder to plasticize resin; a plunger arranged in an injection cylinder to inject the resin; resin passage closing means that closes a resin passage connecting the plasticizing cylinder and the injection cylinder while the plunger is advanced to inject the resin; rotational force detection means that detects a rotational force exerted on the screw while the plunger is advanced; and replacement time prediction means that stores the rotational force detected by the rotational force detection means while the plunger is advanced for each shot of resin, and predicts time for replacement of the resin passage closing means based on transition of the stored rotational force.

The replacement time prediction means may store one of a maximum value of the detected rotational force, an integrated value of the detected rotational force, and an integrated value of the detected rotational force with respect to a position of the plunger while being is advanced for each short of resin, and may predict time for replacement of the resin passage closing means based on transition of the stored value.

The injection molding machine of pre-plasticization type may further comprise resin pressure detection means that detects a pressure of the resin in the injection cylinder while the plunger is advanced, and the replacement time prediction means may store a ratio between the detected resin pressure and the detected rotational force for each shot of resin, and may predict time for replacement of the resin passage closing means based on transition of the stored value.

According to a further aspect of the invention, the injection molding machine of pre-plasticization type comprise: a screw arranged in a plasticizing cylinder to plasticize resin; a plunger arranged in an injection cylinder to inject the resin; resin passage closing means that closes a resin passage connecting the plasticizing cylinder and the injection cylinder while the plunger is advanced to inject the resin; rotational force detection means that detects a rotational force exerted on the screw while the plunger is advanced; and display means that displays the rotational force detected by the rotational force detection means while the plunger is advanced on a display device so as to enable an operator to determine abnormality of the resin passage closing means based on the displayed rotational force.

The display means may display a waveform of the detected rotational force with respect to time or with respect to position of the plunger while being advanced, on the display device.

The display means may display at least one of a maximum value of the detected rotational force, an integrated value of the detected rotational force with respect to time, and an integrated value of the detected rotational force with respect to position of the plunger while being advanced, on the display device.

According to the present invention, there may be provided a pre-plasticization type injection molding machine,

capable of detecting the worn state of the closing means in the resin passage and determining abnormality of the resin passage closing means.

BRIEF DESCRIPTION OF THE DRAWINGS

FIG. 1 is a schematic block diagram of a pre-plasticization type injection molding machine according to one embodiment of the present invention;

FIG. 2 is a graph for illustrating closing failure determination by a rotational force according to the invention;

FIG. 3 is a graph for illustrating closing failure determination by an integrated value (with respect to time or position) of the rotational force according to the invention;

FIG. 4 is a graph for illustrating closing failure determination (normally closed state) based on the ratio of the rotational force to a resin pressure according to the invention;

FIG. 5 is a graph for illustrating closing failure determination (abnormally closed state) based on the ratio of the rotational force to the resin pressure according to the invention;

FIG. 6 is a diagram for illustrating a method of predicting the number of shots made before a closing failure according to the invention; and

FIG. 7 shows an example of a screen for the case where maximum values of the rotational force are displayed on a display device according to the invention.

DETAILED DESCRIPTION

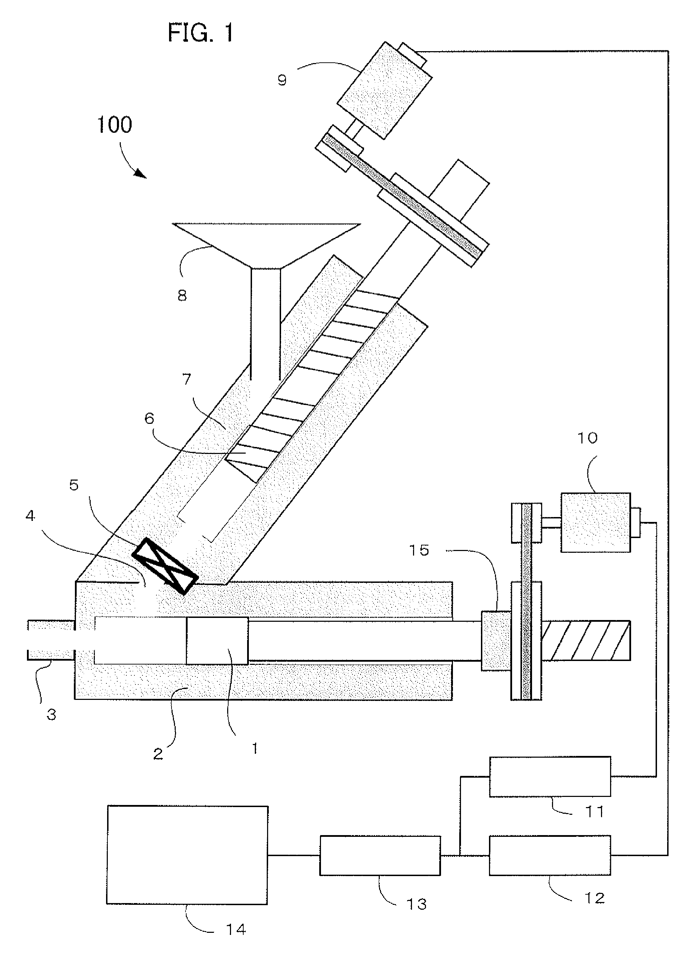

FIG. 1 shows principal parts of a pre-plasticization type injection molding machine according to one embodiment of the present invention.

A pre-plasticization type injection molding machine 100 is provided with an injection section, a plasticizing section, and a resin passage 4 that internally connects these sections. The plasticizing section plasticizes a solid resin as a molding material. The plasticized molten resin is supplied from the plasticizing section to the injection section through the resin passage. The injection section injects the molten resin into a cavity of a mold (not shown).

The injection section includes an injection cylinder 2 for molten resin filling and an injection plunger 1 for injecting the molten resin in the injection cylinder 2 into the mold cavity through a nozzle 3. The injection plunger 1 is slidably supported in the injection cylinder 2 to be movable in an axial direction thereof. The injection plunger 1 advances in the injection cylinder 2 by driving of an injection driving device 10, thereby injecting the molten resin into the mold cavity through the nozzle 3.

The plasticizing section includes a plasticizing screw 6, a plasticizing cylinder 7, and a material feed hopper 8 from which pellets of the solid resin as the molding material is fed. The solid molding material fed from the hopper 8 is changed into the molten resin by mechanical energy that is produced as the plasticizing screw 6 rotates in the plasticizing cylinder 7. The plasticizing screw 6 is rotated by a driving device 9 for plasticization.

The molten resin is fed into the front part of the plasticizing cylinder 7 by a conveying force that is generated as the plasticizing screw 6 rotates. Then, the molten resin is delivered into the injection cylinder 2 through a resin passage 4. A check valve 5 never intercepts the flow of the molten resin while the molten resin is flowing from the plasticizing cylinder 7 toward the injection cylinder 2 in the resin passage.

Since the injection plunger 1 is retreated in the injection cylinder 2 by the pressure of the fed molten resin, the molten resin is metered by controlling the amount of movement of the plunger 1. Thereafter, the injection plunger 1 is advanced by the driving force of the injection driving device 10 that is connected to the rear end of the plunger 1, whereupon the molten resin is filled into the mold cavity (not shown) through the nozzle 3. When this is done, the check valve 5 prevents the molten resin from flowing back from the injection cylinder 2 into the plasticizing cylinder 7 through the resin passage 4.

Servomotors 11 and 12 drivingly control the plasticization driving device 9 and the injection driving device 10, respectively. The plasticization driving device 9 is means for driving the plasticizing screw 6 for rotation. For example, an electric servomotor, electric motor, or hydraulic motor may be used as the plasticization driving device 9. A controller 13 performs drive control for the servomotors 11 and 12 and display control for a display device 14, thus generally controlling the injection molding machine 100. The above is a description of the general configuration of the conventional pre-plasticization type injection molding machine 100.

Based on the knowledge that a rotational force acts on a plasticizing screw if a check valve is worn to allow a molten resin to flow back toward the plasticizing screw, the present invention realizes a function for detecting the worn state of the check valve in the pre-plasticization type injection molding machine. According to the present invention, a rotational force that is exerted on the plasticizing screw 6 during injection and pressure-holding processes for each injection shot is detected, and whether or not the check valve 5 is normally closed is determined based on the detected rotational force. If the rotational force is so great that it is concluded that the check valve 5 is not normally closed, the check valve 5 can be determined to be worn. If the rotational force is small and it is concluded that the check valve 5 is normally closed, on the other hand, the check valve 5 can be determined to be unworn.

In detecting the rotational force exerted on the plasticizing screw 6 during the injection and pressure-holding processes, the screw 6 may be either prevented from rotating or rotated at a given speed. In rotating the screw 6 at the given speed, the selected direction of rotation may be either forward or reverse.

In detecting the rotational force with the plasticizing screw 6 prevented from rotating, the electric servomotor, as an example of the plasticization driving device 9, can be positioned to maintain the rotational position. If the hydraulic motor is used as the plasticization driving device 9, the rotational position can be maintained with an oil passage of the motor closed. Further, a brake or one-way clutch may be used to prevent the rotation of the plasticizing screw 6.

In the present invention, the rotational force that is received from the refluent resin by the plasticizing screw 6 can be detected from the driving force (physical quantity, such as the driving current of the electric servomotor, a load torque obtained by an observer, or the oil pressure of the hydraulic motor) of the plasticization driving device 9. Further, the rotational force that acts on the plasticizing screw 6 can be detected by means a strain sensor that is mounted on the screw 6. If the rotation of the plasticizing screw 6 is stopped by braking means, the rotational force can be detected by the strain sensor on the screw. The resin pressure may be detected by means of a pressure detector, such as a load cell 15 attached to the injection plunger 1, or a resin pressure detector disposed in the injection cylinder 2.

If the check valve 5 is worn so much that the resin passage 4 fails to be fully closed, in the pre-plasticization type injection molding machine 100 shown in FIG. 1, the molten resin flows back from the injection cylinder 2 into the plasticizing cylinder 7 through the resin passage 4. Thereupon, the refluent molten resin applies a component of force around the plasticizing screw 6 to a flight (not shown) formed on the screw 6, thereby generating the rotational force for the screw 6.

Thus, the rotational force that is received by the plasticizing screw 6 during the injection and pressure-holding processes is detected, and whether or not the resin passage 4 is normally closed by the check valve 5 can be determined based on the detected rotational force. Alternatively, the degree of wear of the check valve 5 may be determined based on the maximum value of the rotational force during the injection and pressure-holding processes, the integrated value of the rotational force with respect to time or with respect to the position of the injection plunger 1.

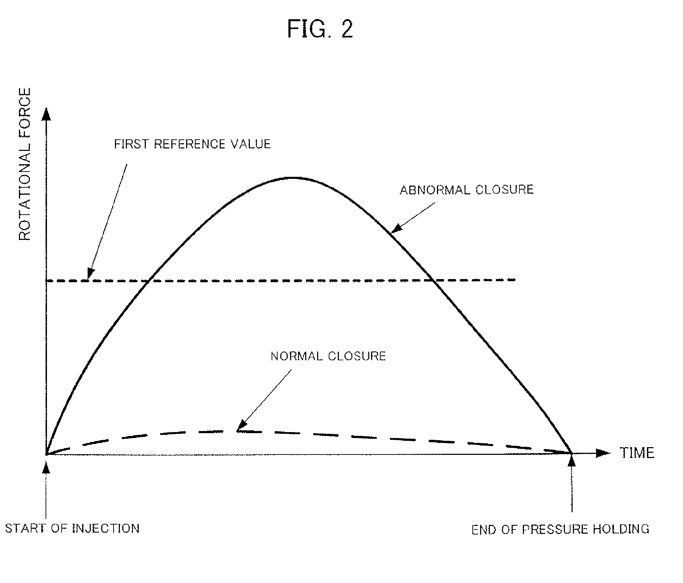

FIG. 2 is a graph for illustrating closing failure determination by the rotational force according to the present invention. If the check valve 5 is worn to allow the molten resin to flow back into the plasticizing cylinder 7, as described with reference to FIG. 1, a rotational force is generated in the plasticizing screw 6, and the rotational force for the time since the start of injection exceeds a first reference value, as indicated by a solid line. If the resin passage 4 is normally closed without wear of the check valve 5, on the other hand, the molten resin hardly flows back, and no substantial rotational force is generated from the molten resin that flows back into the plasticizing cylinder 7, as indicated by a broken line.

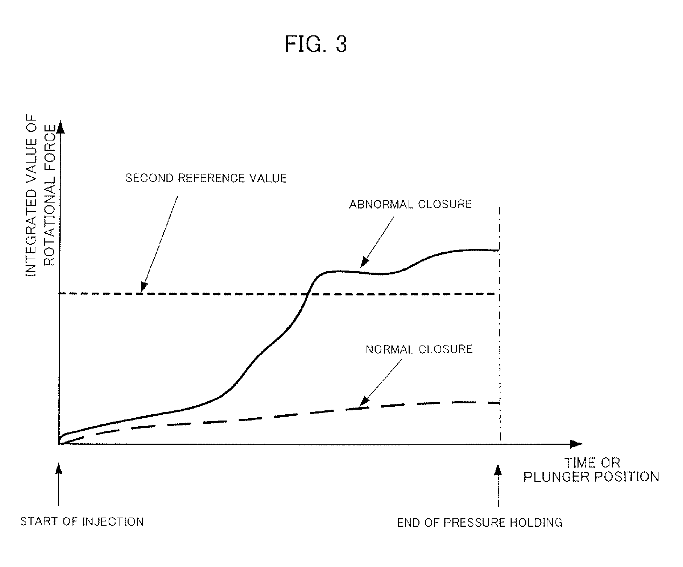

As shown in FIG. 3, the degree of wear of the check valve can be determined based on the integrated value of the rotational force of the plasticizing screw, the integrated value with respect to time from the start of injection (hereinafter referred to as "time integrated value"), or the integrated value with respect to the position of the injection plunger from the start of injection (hereinafter referred to as "position integrated value"). FIG. 2 is a graph showing the relationship between time and the rotational force generated in the plasticizing cylinder 7 during the injection and pressure-holding processes. The graph of the time integrated value of FIG. 3 can be obtained by integrating the rotational force shown in the graph of FIG. 2 with respect to time. The time integrated value and the position integrated value are shown in the same graph of FIG. 3, which indicates that the scale of the abscissa axis for time and position is adjusted. A criterion of determination on whether or not the closing by the check valve 5 is normal based on the integrated value of the rotational force of the plasticizing screw is given as a second reference value, as shown in FIG. 3.

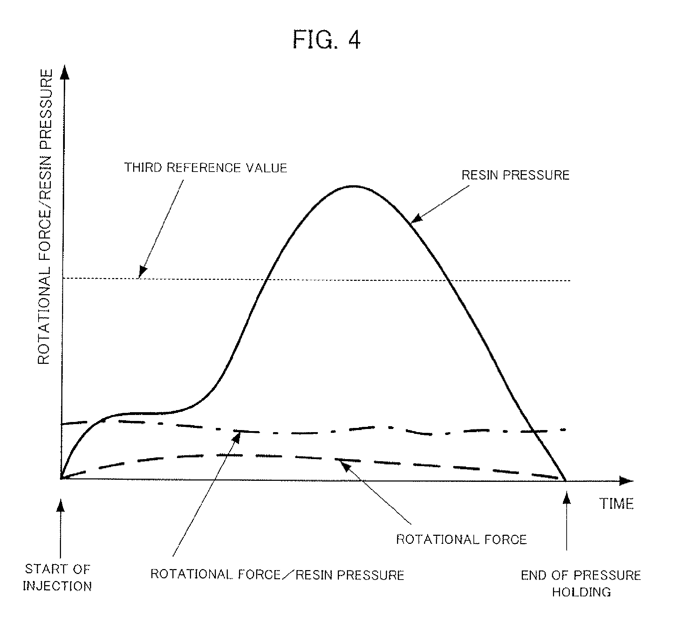

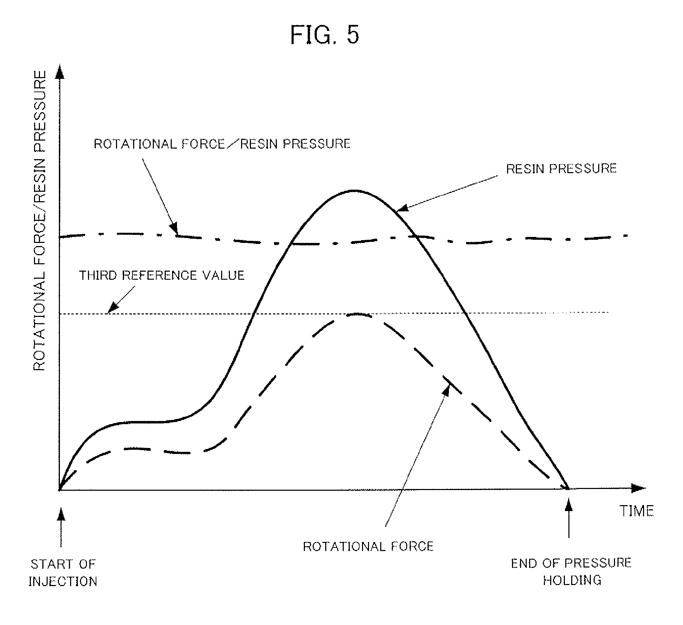

FIG. 4 is a graph for illustrating closing state determination (normally closed state) based on the ratio of the rotational force to the resin pressure according to the present invention. FIG. 5 is a graph for illustrating closing state determination (abnormally closed state) based on the ratio of the rotational force to the resin pressure according to the present invention. In FIGS. 4 and 5, a criterion of determination on whether or not the closing by the check valve 5 is normal is given as a third reference value. As shown in FIGS. 4 and 5, the degree of wear of the check valve 5 can be determined based on the ratio of the rotational force of the plasticizing screw 6 to the molten resin pressure.

The backflow of the molten resin into the plasticizing cylinder 7 is caused by a pressure difference if the resin pressure in the injection cylinder 2 is higher. Even if the check valve 5 is worn, therefore, the amount of backflow and the rotational force generated in the plasticizing screw 6 are small when the resin pressure in the injection cylinder 2 is low. When the resin pressure in the injection cylinder 2 is high, on the other hand, the amount of backflow is large, so that the rotational force generated in the plasticizing screw 6 increases. In other words, the rotational force for the plasticizing screw 6 is changed by the resin pressure in the injection cylinder 2 although the degree of wear of the check valve 5 is not changed.

Accordingly, the degree of wear of the check valve 5 can be accurately determined based on the ratio of the rotational force of the plasticizing screw 6 to the resin pressure without being influenced by the magnitude of the resin pressure. If the force-to-pressure ratio is not lower than a reference value, for example, the check valve 5 can be determined to be worn. If the ratio is lower than the reference value, the check valve 5 can be determined to be unworn.

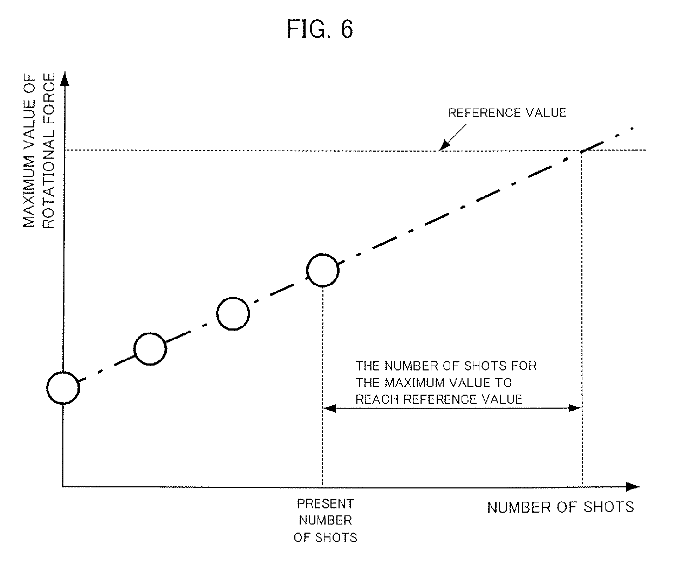

FIG. 6 is a diagram for illustrating a method of predicting the number of shots made before a closing failure according to the present invention. The maximum value of the rotational force that is received by the plasticizing screw 6 during the injection and pressure holing processes for each shot of the resin molding operation of the pre-plasticization type injection molding machine 100 is stored. The increase of the maximum value of the rotational force for each shot can be obtained based on stored data for this maximum value. Based on the maximum value of the rotational force for the last shot and the increase of the rotational force for each shot, moreover, the maximum value of the rotational force after a predetermined number of shots or the number of shots made before a predetermined maximum value of the rotational force is attained can be predicted.

The maximum value of the rotational force after the predetermined number k of shots can be predicted according to equation (1) as follows:

$$F_{n+k} = F_n + k \cdot (F_n - F_{n-1}), \qquad \ldots\ldots (1)$$

where $F_{n+k}$ is the predicted maximum value of the rotational force after a number, k, of shots, $F_n$ is a maximum value of the rotational force for the last shot, and $F_{n-1}$ is a maximum value of the rotational force for the last shot but one.

If the predicted maximum value of the rotational force after the predetermined number of shots becomes not lower than a reference value, therefore, it is concluded that the wear of the check valve 5 is advanced, and an operator can be notified of a message to recommend replacement of the check valve. Thus, the check valve can be replaced before it is worn and produces a defective.

Further, the predicted value m of the number of shots made before maximum value of the rotational force reaches a predetermined value can be predicted according to equation (2) as follows:

$$m = (F_{limit} - F_n)/(F_n - F_{n-1}), \qquad \ldots\ldots (2)$$

where m is the predicted value of the number of shots to be made before the predetermined value is reached by the maximum value of the rotational force, $F_{limit}$ is a predetermined maximum value of the rotational force, $F_n$ is the maximum value of the rotational force for the last shot, and $F_{n-1}$ is the maximum value of the rotational force for the last shot but one.

If the predicted value of the number of shots to be made before the predetermined maximum value of the rotational force is reached becomes not greater than a predetermined value, therefore, it is concluded that the wear of the check valve is advanced, and the operator can be notified of a message to recommend replacement of the check valve, as in the aforesaid case.

Although the maximum value of the rotational force has been described above as an example, it may be replaced with an integrated value (time or position integrated value) of the rotational force. In this case, the variable $F_n$ in equations (1) and (2) represents an integrated value of the rotational force for the last shot. Further, $F_{n+k}$ represents a predicted maximum value of an integrated value of the rotational force after the number, k, of shots, and $F_{n-1}$ represents an integrated value of the rotational force for the last shot but one. Likewise, m represents a predicted value of the number of shots made before a predetermined integrated value of the rotational force is attained, and $F_{limit}$ represents a predetermined integrated value of the rotational force.

Alternatively, an increase rate of the maximum value of the ratio between the resin pressure and the rotational force may be used for the purpose. In this case, the variable $F_n$ in equations (1) and (2) represents the maximum value of the ratio between the resin pressure and the rotational force for the last short. Further, $F_{n+k}$ represents a predicted maximum value of the ratio between the resin pressure and the rotational force after the number, k, of shots, and $F_{n-1}$ represents a maximum value of the ratio between the resin pressure and the rotational force for the last shot but one. Likewise, m represents a predicted value of the number of shots made before the predetermined maximum value of the ratio between the resin pressure and the rotational force is attained, and $F_{limit}$ represents the predetermined maximum value of the ratio between the resin pressure and the rotational force.

In each shot, at least one of values including, for example, the maximum value of the rotational force, the integrated value of the rotational force, and the maximum value of the ratio of the rotational force to the resin pressure, is selected and stored in a memory.

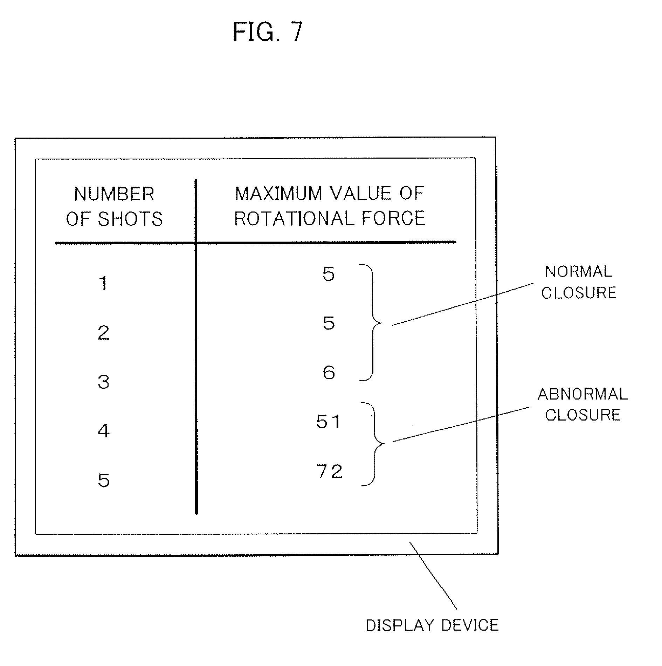

FIG. 7 shows an example of a screen for the case where maximum values of the rotational force that is received by the plasticizing screw during the injection and pressure holing processes are displayed on the display device according to the present invention. If the rotational force is displayed on the screen of the flexure 14 of the pre-plasticization type injection molding machine 100, the machine operator can determine the abnormality of the check valve 5. FIG. 7 shows the maximum values of the rotational force for individual shots. Unit symbols are omitted from this screen display.

Maximum values of the rotational force for first, second, third, fourth, and fifth shots are 5, 5, 6, 51 and 72, respectively. Since the values for the first to third shots are not higher than the first reference value (see FIG. 2), the check valve 5 is determined to be closed normally. Since the maximum values of the rotational force for the fourth and fifth shots are higher than the reference value for the determination of abnormal closing (see FIG. 2), it is concluded that the check valve 5 is subject to a closing failure in the fourth and fifth shots.

The following advantages can be obtained according to the present invention.

Since the wear of the check valve can be detected, the time for the replacement of the check valve can be controlled appropriately.

Since the operator's visual confirmation is unnecessary, unattended monitoring is available.

Since the check valve can be replaced based on wear detection before it is worn and produces a defective, occurrence of a molding failure can be prevented.

Since the wear of the check valve can be detected without interrupting the molding operation, a wear test for the check valve can be performed without stopping the production, so that the production efficiency is improved.

It is possible to detect a backflow of the resin in case of inclusion of foreign matter in the check valve, as well as a resin backflow attributable to the wear of the check valve. Thus, a molding failure that is caused by foreign matter inclusion can be detected.

The present invention is applicable to a pre-plasticization type injection molding machine that is provided with closing means in a resin passage between a metering section and an injection section. The closing means may be a check valve in the resin passage or such a system that the resin passage is closed as a plasticizing screw is advanced, retreated, or rotated.

## Claims

1. An injection molding machine of pre-plasticization type, comprising:

   a screw arranged in a plasticizing cylinder to plasticize resin;
   a plunger arranged in an injection cylinder to inject the resin;
   resin passage closing means that closes a resin passage connecting said plasticizing cylinder and said injection cylinder while said plunger is advanced to inject the resin;
   rotational force detection means that detects a rotational force exerted on said screw while said plunger is advanced; and
   closure abnormality determining means that determines abnormality of said resin passage closing means based on the rotational force detected by said rotational force detection means while said plunger is advanced.

2. An injection molding machine of pre-plasticization type according to claim 1, wherein said closure abnormality determining means determines abnormality of said resin passage closing means based on a comparison between a predetermined value and one of a maximum value of the detected rotational force, an integrated value of the detected rotational force with respect to time, and an integrated value of the detected rotational force with respect to position of said plunger while being advanced.

3. An injection molding machine of pre-plasticization type according to claim 1, further comprising resin pressure detection means that detects a pressure of the resin in said injection cylinder while said plunger is advanced, wherein said closing abnormality determining means determines abnormality of said resin passage closing means based on a ratio between the detected resin pressure and the detected rotational force.

4. An injection molding machine of pre-plasticization type, comprising:

   a screw arranged in a plasticizing cylinder to plasticize resin;
   a plunger arranged in an injection cylinder to inject the resin;
   resin passage closing means that closes a resin passage connecting said plasticizing cylinder and said injection cylinder while said plunger is advanced to inject the resin;
   rotational force detection means that detects a rotational force exerted on said screw while said plunger is advanced; and

conformity determination means that determines conformity of a molded product based on the rotational force detected by said rotational force detection means while said plunger is advanced.

5. An injection molding machine of pre-plasticization type according to claim 4, wherein said conformity determination means determines the conformity of the molded product based on a comparison between a predetermined value and one of a maximum value of the detected rotational force, an integrated value of the detected rotational force with respect to time, and an integrated value of the detected rotational force with respect to position of said plunger while being advanced.

6. An injection molding machine of pre-plasticization type according to claim 4, further comprising resin pressure detection means that detects a pressure of the resin in said injection cylinder while said plunger is advanced, wherein said conformity determination means determines conformity of the molded product based on a ratio between the detected resin pressure and the detected rotational force.

7. An injection molding machine of pre-piasticization type, comprising:

a screw arranged in a plasticizing cylinder to plasticize resin;
a plunger arranged in an injection cylinder to inject the resin;
resin passage closing means that closes a resin passage connecting said plasticizing cylinder and said injection cylinder while said plunger is advanced to inject the resin;
rotational force detection means that detects a rotational force exerted on said screw while said plunger is advanced; and
replacement time prediction means that stores the rotational force detected by said rotational force detection means while said plunger is advanced for each shot of resin, and predicts time for replacement of said resin passage closing means based on transition of the stored rotational force.

8. An injection molding machine of pre-plasticization type according to claim 7, wherein said replacement time prediction means stores one of a maximum value of the detected rotational force, an integrated value of the detected rotational force, and an integrated value of the detected rotational force with respect to a position of said plunger while being is advanced for each short of resin and predicts time for replacement of said resin passage closing means based on transition of the stored value.

9. An injection molding machine of pre-plasticization type according to claim 7, further comprising resin pressure detection means that detects a pressure of the resin in said injection cylinder while said plunger is advanced, wherein said replacement time prediction means stores a ratio between the detected resin pressure and the detected rotational force for each shot of resin, and predicts time for replacement of said resin passage closing means based on transition of the stored value.

10. An injection molding machine of pre-plasticization type, comprising:

a screw arranged in a plasticizing cylinder to plasticize resin;
a plunger arranged in an injection cylinder to inject the resin;
resin passage closing means that closes a resin passage connecting said plasticizing cylinder and said injection cylinder while said plunger is advanced to inject the resin;
rotational force detection means that detects a rotational force exerted on said screw while said plunger is advanced; and
display means that displays the rotational force detected by said rotational force detection means while said plunger is advanced on a display device so as to enable an operator to determine abnormality of said resin passage closing means based on the displayed rotational force.

11. An injection molding machine of pre-plasticization type according to claim 10, wherein said display means displays a waveform of the detected rotational force with respect to time or with respect to position of said plunger while being advanced, on the display device.

12. An injection molding machine of pre-plasticization type according to claim 10, wherein said display means displays at least one of a maximum value of the detected rotational force, an integrated value of the detected rotational force with respect to time, and an integrated value of the detected rotational force with respect to position of said plunger while being advanced, on the display device.

FIG. 1

100

# FIG. 2

# FIG. 3

SECOND REFERENCE VALUE

ABNORMAL CLOSURE

NORMAL CLOSURE

INTEGRATED VALUE OF ROTATIONAL FORCE

TIME OR PLUNGER POSITION

START OF INJECTION

END OF PRESSURE HOLDING

# FIG. 4

# FIG. 5

FIG. 6

# FIG. 7

| NUMBER OF SHOTS | MAXIMUM VALUE OF ROTATIONAL FORCE | |
|---|---|---|
| 1 | 5 | NORMAL CLOSURE |
| 2 | 5 | |
| 3 | 6 | |
| 4 | 51 | ABNORMAL CLOSURE |
| 5 | 72 | |

DISPLAY DEVICE

Europäisches
Patentamt

European
Patent Office

Office européen
des brevets

**EUROPEAN SEARCH REPORT**

Application Number

EP 09 10 0142

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 153 149 A (NAITO HIDEO [JP] ET AL) 6 October 1992 (1992-10-06) * column 1, line 67 - column 2, line 27; figures 1,2 * ----- | 1-12 | INV. B29C45/54 B29C45/76 |
| A | US 4 678 420 A (INOUE KIYOSHI [JP]) 7 July 1987 (1987-07-07) * abstract; figure 1 * * page 8, line 11 - line 14 * ----- | 1-12 | |

TECHNICAL FIELDS
SEARCHED (IPC)

B29C

The present search report has been drawn up for all claims

| Place of search | Date of completion of the search | Examiner |
|---|---|---|
| Munich | 27 July 2009 | Brunswick, André |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 09 10 0142

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2009

| Patent document cited in search report | | Publication date | Patent family member(s) | | Publication date |
|---|---|---|---|---|---|
| US 5153149 | A | 06-10-1992 | DE | 3883757 D1 | 07-10-1993 |
| | | | DE | 3883757 T2 | 09-12-1993 |
| | | | EP | 0349649 A1 | 10-01-1990 |
| | | | WO | 8906186 A1 | 13-07-1989 |
| | | | JP | 1168421 A | 03-07-1989 |
| | | | JP | 1990886 C | 08-11-1995 |
| | | | JP | 7012634 B | 15-02-1995 |
| US 4678420 | A | 07-07-1987 | DE | 3571577 D1 | 24-08-1989 |
| | | | EP | 0153075 A2 | 28-08-1985 |

EPO FORM P0459

For more details about this annex : see Official Journal of the European Patent Office, No. 12/82

**REFERENCES CITED IN THE DESCRIPTION**

**Patent documents cited in the description**

- JP 5084793 A
- JP 3097518 A
- JP 7011321 U
- JP 8183078 U
- JP 11165333 A
- JP 8183078 A